# EUROPÄISCHE PATENTANMELDUNG

(11) **EP 1 512 450 A1**
(43) Veröffentlichungstag der Anmeldung: **09.03.2005**
(21) Anmeldenummer: 04011714.5
(22) Anmeldetag: 18.05.2004
(51) Int. Cl.: B01D 25/26, B01D 25/32

(54) **Filtervorrichtung**

(30) Priorität: 02.09.2003 DE 10340366
(71) Anmelder: KHS Maschinen- und Anlagenbau Aktiengesellschaft, 44143 Dortmund (DE)
(72) Erfinder: Becker, Hans, 55457 Gensingen (DE)

(57) **Zusammenfassung**

Vorgestellt wird eine Filtervorrichtung mit mehreren in Richtung einer vertikalen Filtermittelachse übereinander angeordneten, im Wesentlichen horizontalen Filterbereichen denen wenigstens ein zentrales Verteilrohr (2), wenigstens ein gemeinsamer Unfiltratkanal (1) zum Führen einer zu filternden Flüssigkeit (Unfiltrat) sowie wenigstens ein gemeinsamer Filtratkanal (14) zum Abführen der gefilterten Flüssigkeit (Filtrat) zugeordnet ist und die jeweils wenigstens eine an einem Filterelement (7) vorgesehene Filterschicht aufweist, die für das Anschwemmen wenigstens einer von mindestens einem Filterhilfsmittel gebildeten Anschwemmschicht dient und einen in den Filtratkanal (14) mündenden Filtratsammelbereich von einem darüber liegenden Trubraum trennt, sowie mit einem für jedes Filterelement (7) vorgesehenen, die Filtermittelachse umschließenden ringartigen Zulaufkanal der an seinem Umfang in einem größeren, ersten radialen Abstand von der Filtermittelachse an einer Austrittsöffnung in den Trubraum mündet und in einem kleineren, zweiten radialen Abstand von der Filtermittelachse wenigstens eine mit dem Unfiltratkanal in Verbindung stehende Eintrittsöffnung für das Unfiltrat aufweist, wobei der von den Filterbereichen umschlossene Austritt des Unfiltratkanals im Bereich der Filtermittelachse vorgesehen ist, dabei ist vorgesehen, dass jedem Filterelement (7) und/oder einer Gruppe von Filterelementen (7) wenigstens ein Flüssigkeitsventil zugeordnet ist, welches sich im Filtratablauf befindet.

## Beschreibung

Die Erfindung bezieht sich auf eine Filtervorrichtung gemäß des Oberbegriffes des Patentanspruches 1 und auf ein Verfahren zum Betrieb einer derartigen Filtervorrichtung.

In der Technik sind zahlreiche Filtervorrichtungen bekannt geworden.

So stellt z.B. die EP 0 379 054 B1 eine Filtervorrichtung vor, bei der mehrere ringscheibenförmige, im Wesentlichen horizontal ausgebildete Filterelemente übereinander angeordnet sind, wobei sich diese Filterelemente zwischen einem Boden- und einem Deckelelement befinden, welche gemeinsam mit der äußeren Umrandung der Filterelemente das äußere Gehäuse eines derartigen Filters bilden.

Darüber hinaus weisen die Filterelemente in ihrer Mitte eine runde Öffnung auf, welche zum einen die Verbindung zu den anderen Filterelementen darstellt und zum anderen zur Zufuhr der zu filternden Flüssigkeit - dem Unfiltrat - dient. Jedes dieser Filterelemente beinhaltet eine Trennschicht welche den Unfiltratraum vom Filtratraum trennt.

Diese Trennschicht kann z.B. durch einen Spaltsiebboden gebildet werden, wobei dieser Spaltsiebboden wiederum auf einer Trennplatte gelagert ist, welche gleichzeitig die flüssigkeitsdichte Abgrenzung zum unterhalb dieses Filterelementes angeordneten nächsten Filterelementes bildet.

U.a. zur Verbesserung der Filterleistung wird vor dem eigentlichen Filtriervorgang ein sogenannter Filterkuchen, d.h. eine Schicht von Filterhilfsmitteln an die Trennschicht angeschwemmt.

Zum Spülen bzw. Reinigen einer derartigen Filteranordnung ist vorgesehen, dass eine entsprechende Spül- oder Reinigungsflüssigkeit unter hohem Druck in das System eingeleitet wird. Dabei wird die Reinigungsflüssigkeit dem Filter von außen zugeführt, wobei die Zufuhr der Reinigungsflüssigkeit zunächst durch mindestens eine Leitung mit großem Querschnitt erfolgt.
Anschließend wird die Flüssigkeit durch Bohrungen mit vergleichsweise kleinem Querschnitt von außen in den Unfiltratraum eines jeden Filterelementes geleitet, wobei sich Flüssigkeitsströmungen ergeben, welche im Wesentlichen von der äußeren Umfangsfläche des Filterelementes auf die in der Mitte des Filterelementes befindliche runde Öffnung gerichtet sind.

Die an der äußeren Umfangsfläche des Filterelementes befindlichen Bohrungen sind z.B. paarweise ausgeführt, wobei eine dieser Bohrungen derart ausgeführt ist, dass die durch diese Bohrung strömende Flüssigkeit den Filterkuchen in eine Rotationsbewegung versetzt, und die andere Bohrung so ausgeführt ist, dass die durch diese Bohrung strömende Flüssigkeit den Filterkuchen in kleine Teile zerteilt, so dass der gesamte Filterkuchen problemlos durch die Unfiltratleitung abgeführt werden kann.

Eine Filtervorrichtung gemäß der EP 0 379 054 bietet bei geringem Platzbedarf und geringem Verbrauch an Filterhilfsmitteln wie z.B. Kieselgur eine hervorragende Filtrierleistung.

Nachteilig an einer derartigen Vorrichtung ist ein unbefriedigendes Verhalten während des Reinigens bzw. Spülens.

Während des Reinigens und/oder Spülens soll auch der Spaltsiebboden von an ihm anhaftenden Filterrückständen gereinigt werden. Dazu wird die Rückseite des Spaltsiebbodens mit Spülflüssigkeit beaufschlagt, wobei diese den Filterelementen durch die Filtratleitung zugeführt wird. Die Spülflüssigkeit durchströmt den Spaltsiebboden von der Filtratseite kommend hin zur Unfiltratseite und entfernt dabei an dem Spaltsiebboden anhaftende Filterrückstände.

Die bereits oben erwähnten Nachteile liegen darin, dass die Spülflüssigkeit mit einem bestimmten und nicht beliebig steigerbaren Volumenstrom zugeführt wird, welcher sich aufgrund der räumlichen Gegebenheiten auf eine Vielzahl von Filterelemeriten verteilen muss. Dabei ist ebenfalls zu beachten, dass diese Filterelemente eine sehr große zu reinigende Fläche - nämlich die Kreisringfläche des jeweiligen Spaltsiebbodens - aufweisen was zur Folge hat, dass die innerhalb der Filterelemente erreichbaren Strömungsgeschwindigkeiten in der Regel nicht ausreichen um alle Filterrückstände bzw. Schmutzpartikel von den Spaltsiebböden zu lösen und anschließend auszutragen.

Die auftretende Reduzierung der Strömungsgeschwindigkeit wird besonders deutlich, wenn man die Querschnittsflächen der Zufuhrleitung(en) der Spülflüssigkeit mit der Summe der Flächen der Spaltsiebböden aller Filterelemente vergleicht.

Da sich diese Filterelemente darüber hinaus auch noch auf unterschiedlichen Höhenebenen befinden, weichen die Größen der Volumenströme, welche z.B. das unterste, das mittlere oder aber das oberste Filterelement erreichen, stark von einander ab.

Der ein Filterelement erreichende Volumenstrom kann durch dessen Aufteilung in zahlreiche Teilströme und durch die gegebenen unterschiedlichen Höhenebenen und durch weitere, an dieser Stelle nicht näher erläuterte Einflussfaktoren soweit reduziert werden, dass es auch beim Austragen der Filterkuchen zu negativen Effekten kommt.

So kann es zum Beispiel vorkommen, dass die Filterkuchen einzelner Filterelemente während des Reinigungsvorganges nicht mehr vollständig von der Trennebene abgelöst und zerkleinert werden, wodurch die Reinigung nur unvollkommen durchgeführt wird, was zur Folge hat, dass anschließend keine optimalen Filtrierleistungen erzielt werden.

Der oben beschriebene Effekt, dass unterschiedlich große Volumenströme je Filterelement auftreten, wirkt sich auch während des Normalbetriebes negativ auf die Filtrationsleistung aus, da nicht alle Filterelemente optimal mit Unfiltrat versorgt werden und somit auch nicht im maximal möglichen Umfang zur Filtrierleistung beitragen können.

Dieser Effekt bewirkt in der Regel eine größere Dimensionierung derartiger Filteranlagen wodurch unnötige Anschaffungs- und Betriebskosten entstehen.

Aufgabe und Ziel der vorliegenden Erfindung ist es, hier Abhilfe und Verbesserung zu schaffen, so dass Reinigung und Spülen bei einer derartigen Filteranordnung schnell, umfassend und fehlerfrei durchgeführt werden können, und dass durch eine gleichmäßige Versorgung der einzelnen Filterelemente mit Unfiltrat eine optimale Filterleistung erreicht wird wodurch Raumbedarf und Kosten erfindungsgemäßer Vorrichtungen im Vergleich zu bekannten Vorrichtungen bedeutend reduziert werden können.

Dazu sieht die Erfindung vor, den Volumenstrom des Spülmittels, welches zum Austragen und Zerteilen des Filterkuchens verwendet wird, durch jedem Filterelement zugeordnete Ventile so zu steuern, dass alle Filterelemente mit einem ausreichend großen Volumenstrom versorgt werden, wobei in einer besonders vorteilhaften Ausgestaltung vorgesehen ist, dass jedes Ventil einzeln ansteuerbar ist, so dass der Volumenstrom der Spülflüssigkeit gezielt einem oder aber auch mehreren Filterelementen gleichzeitig zugeführt werden kann.

Ebenfalls ist vorgesehen, auch jeden Filtratauslauf eines jeden Filterelementes durch jeweils eigene Ventile steuerbar auszuführen, wodurch während des Normalbetriebes der Volumenstrom des Unfiltrats gezielt für jedes Filterelement einstellbar ist, und wodurch während des Spülens der Spaltsiebböden der Volumenstrom des Spülmittels ebenfalls gezielt für jedes Filterelement einstellbar ist.

Im Nachfolgenden wird die Erfindung anhand von Ausführungsbeispielen näher erläutert. Im Einzelnen zeigt die
- Figur 1:: einen bekannten Stand der Technik
- Figur 2:: in einer vereinfachten Explosionsdarstellung eine erfindungsgemäße Vorrichtung, und die
- Figur 3:: in einer vergrößerten Detailansicht die Strömungsverhältnisse bei der Anströmung der einzelnen Filterelemente und die
- Figur 4:: in einer schematisierten Schnittdarstellung die Ansteuerung der Volumenströme der einzelnen Filterelemente durch die den Filterelementen zugeordneten Ventile.

Weiterbildungen, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von Ihrer Zusammenfassung in den Ansprüchen oder deren Rückbeziehung. Gleichzeitig wird der Inhalt der Ansprüche zu einem Bestandteil der Beschreibung gemacht.

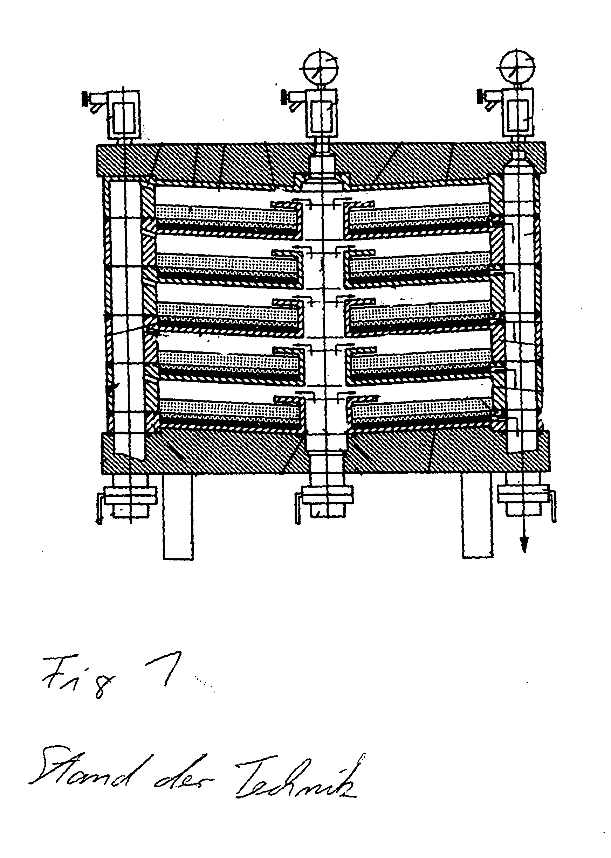

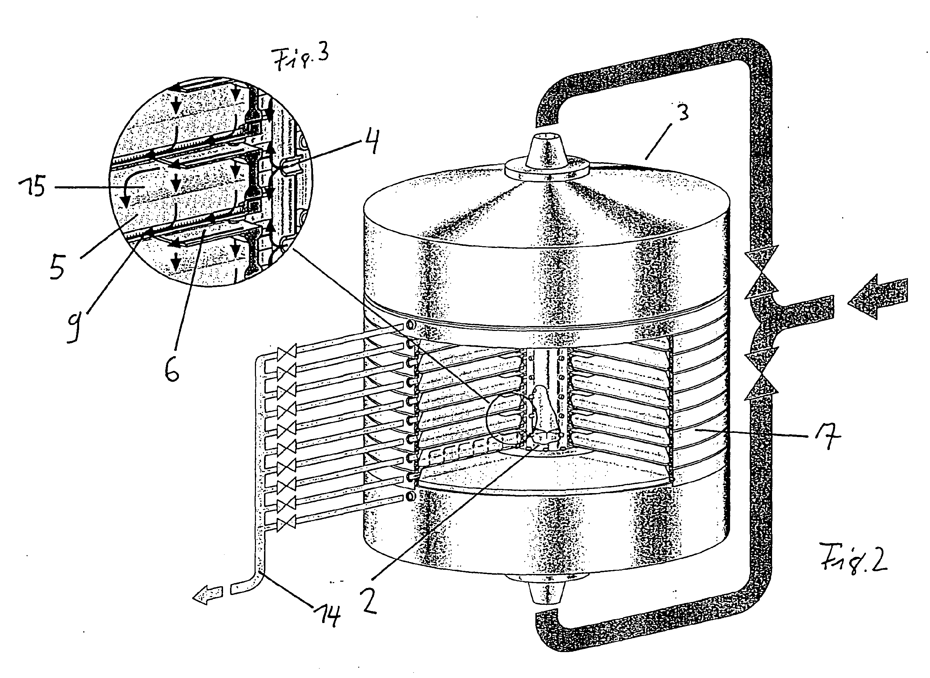

Wie in der Figur 2 dargestellt, strömt das Unfiltrat durch entsprechende Zufuhrleitungen 1 zu einem zentralen, im Inneren des Filters befindlichen, zentralem Verteilrohr 2, wobei das Unfiltrat zur Verbesserung der Strömungsverhältnisse dem Filter 3 sowohl an seinem oberen, als auch an seinem unteren Ende zugeführt wird.

Um die Anströmung der einzelnen Filterelemente 7 weiter zu verbessern, ist das zentrale Verteilrohr 2 mit zahlreichen, radial aus diesem hervortretenden Rohrstutzen 4 versehen. Um während des Filtrationsprozesses den Filterkuchen 5 nicht aufzuwirbeln, hat es sich als besonders Vorteilhaft erwiesen, die Rohrstutzen 4 höhenmäßig so anzuordnen, dass der aus ihnen austretende Volumenstrom nicht direkt in einen Zulaufkanal 6 eines Filterelementes 7 gelangt, sondern anstatt dessen auf die innere Wandung der Filterelemente 7 trifft, wodurch der ausgeprägte Geschwindigkeits- und Richtungsvektor der Strömung vernichtet wird, woraus letzten Endes eine gleichmäßige und weitestgehend turbulenzfreie Anströmung der Filterkuchen 5 erreicht wird.

Der Filterkuchen 5 ruht auf einem Spaltsiebboden 8 welcher sich wiederum auf einer Trennplatte 9 abstützt. Diese Trennplatte 9 stellt gleichzeitig die flüssigkeitsdichte Abtrennung des Filtratraumes des betrachteten Filterelementes 7 zum Unfiltratraum des höhenmäßig unterhalb angeordneten Nachbar-Filterelementes dar.

Der Reinigungsprozess einer erfindungsgemäßen Filtervorrichtung setzt sich im Wesentlichen aus zwei Schritten zusammen. Beim ersten Schritt handelt es sich um das Zerteilen und/oder Austragen des Filterkuchens 5. Den zweiten Schritt stellt das Spülen des Spaltsiebbodens 8 dar.

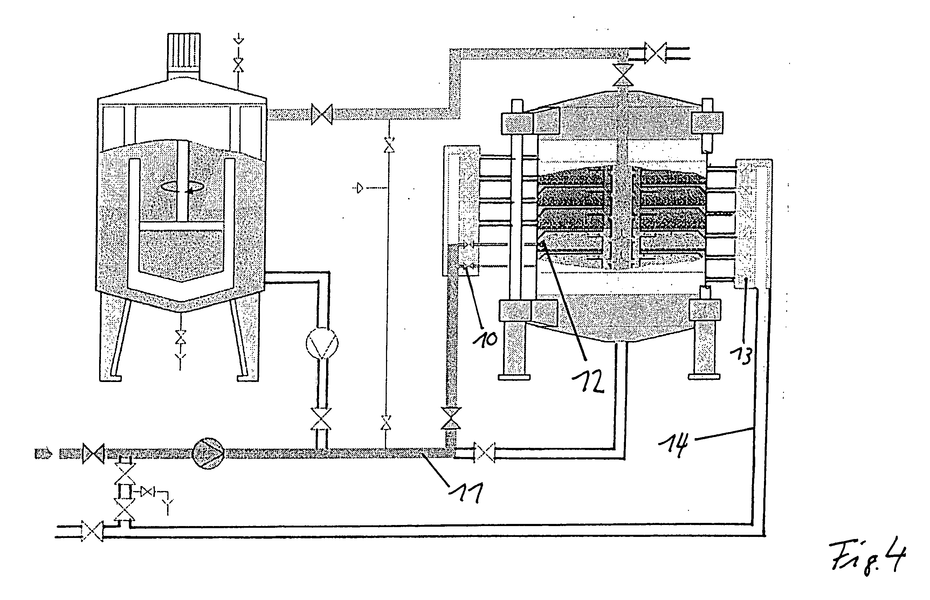

Wie in der Figur 4 dargestellt, wird die zur Reinigung des Filters verwendete Spülflüssigkeit, dabei kann es sich z.B. um Wasser handeln, durch eine Zufuhrleitung 11, Spülflüssigkeitsventile 10 und Austragsdüsen 12 den Filterelementen 7 zugeführt, wobei die Spülflüssigkeitsventile 10 und Austragsdüsen 12 jedem einzelnen Filterelement 7 separat zugeordnet sind.

Die Bauteile Spülflüssigkeitsventil 10 und Austragsdüsen 12 können jedem Filterelement 7 auch mehrfach, vorzugsweise paarweise und an gegenüberliegenden Positionen angebracht, zugeordnet sein.

Im Rahmen der vorliegenden Erfindung ist es ebenfalls vorgesehen, den Filtratauslauf eines jeden Filterelementes 7 mit einem eigenen Ventil, dem so genannten Filtratventil 13 auszustatten. Weitere Erläuterungen zu diesem Thema folgen an anderer Stelle.

Wie bereits oben erwähnt, erzeugt eine Austragsdüse 12 zwei Spülflüssigkeitsstrahlen, wobei der erste Strahl derart ausgerichtet ist, dass er den Filterkuchen 5 in Rotation versetzt, und wobei der zweite Strahl derart ausgerichtet ist, dass er den in Rotation versetzten Filterkuchen 5 in kleine Stücke zerteilt. Der so in seine Bestandteile zerlegte Filterkuchen 5 wird durch die Spülflüssigkeit auf dem Weg durch den Zulaufkanal 6, die Rohrstutzen 4 und das zentrale Verteilrohr 2 aus dem Filter 3 ausgetragen und einer Aufbereitung zugeführt.

Anschließend erfolgt das Spülen des Spaltsiebbodens 8. Dazu wird die Spülflüssigkeit den Filtraträumen der Filterelemente 7 zugeführt, wobei die Spülflüssigkeit die Filtratventile 13 in umgekehrter Richtung wie das Filtrat durchströmt.

Um die oben beschriebenen, beim Austrag des Filterkuchens 5 und dem Spülen des Spaltsiebbodens 8 - aufgrund der geringen Strömungsgeschwindigkeit - auftretenden Nachteile sicher zu vermeiden, sieht die vorliegende Erfindung neben der filterelementspezifischen Anordnung der Spülflüssigkeitsventile 10 und der Filtratventile 13 vor, den Volumenstrom der Spülflüssigkeit gezielt einem oder einer Gruppe von Filterelementen 7 zu zuleiten, wodurch erreicht wird, dass in jedem dieser Filterelemente 7 eine Strömungsgeschwindigkeit und ein Volumenstrom erreicht werden, welche so groß sind, dass sowohl beim Austrag des Filterkuchens 5, als auch beim Reinigen des Spaltsiebbodens 8 ein optimales Reinigungsergebnis erzielt wird.

Es versteht sich von selbst, dass während des Reinigungsprozesses nacheinander alle Filterelemente 7 einzeln oder als Bestandteil einer Gruppe von Filterelementen 7 mit Spülflüssigkeit beaufschlagt werden.

Es ist vorgesehen, die Spülflüssigkeitsventile 10 und die Filtratventile 13 als Absperrventile auszuführen, welche lediglich eine Offen-Stellung oder eine Geschlossen-Stellung einnehmen können.

An geeigneter Stelle Spülflüssigkeitsventile 10 und Filtratventile 13 nachfolgend als Flüssigkeitsventile bezeichnet.

In einer weiteren, überaus vorteilhaften Ausgestaltung der vorliegenden Erfindung ist vorgesehen, dass die Spülflüssigkeitsventile 10 und die Filtratventile 13 als Stromregelventile ausgeführt werden, welche es gestatten, den jeweiligen Volumenstrom auf jeden gewünschten Wert zwischen 0 und 100% einzustellen, so dass z.B. durch die gezielte Kompensation der, den Volumenstrom vermindernden Faktoren, mehr Filterelemente 7 gleichzeitig gereinigt werden können, wodurch sich kürzere Reinigungszeiten ergeben.

Ebenfalls fallen alle in der Technik bekannten Antriebsarten für Absperr- oder Stromregelventile - so z.B. elektrische, hydraulische oder pneumatische Antriebsvarianten oder Kombinationen dieser Möglichkeiten - in den Schutzumfang der vorliegenden Anmeldung.

Durch die Ausstattung eines jeden Filterelementes 7 mit einem eigenen Filtratventil 13 ergeben sich z.B. deutliche Vorteile beim Aufbau des Filterkuchens, da das Abschwemmen des Filterkuchens nun gezielt für jedes einzelne Filterelement gesteuert werden kann.

Die technische Lehre der vorliegenden Erfindung umfasst sowohl die Verwendung von Absperrventilen, als auch die Verwendung von Stromregelventilen als Filtratventil 13.

Ebenfalls ist für eine weitere Ausbildung der vorliegenden Erfindung vorgesehen, jeweils mindestens zwei der Austragsdüsen 12 und/oder der Filtrataustrittsöffnungen zu einer Gruppe zusammenzufassen, wobei an einem Filter 3 auch mehrere Gruppen gebildet werden können. Jeder dieser Gruppen wird je nach Art der zusammengefassten Elemente ein Spülflüssigkeitsventil 10 oder ein Filtratventil 13 zugeordnet. Bei einer derartigen konstruktiven Gestaltung ist es natürlich nicht möglich, die oben und nachfolgend beschriebenen Vorteile in vollem Umfang zu realisieren, doch ergeben sich anstatt dessen Vorteile hinsichtlich der Herstellkosten einer solchen Anlage. Ebenfalls wird der Aufwand für die Steuerung einer derartigen Anlage reduziert.

Auch die Anwendung von einer Kombination von direkt einem Filterelement 7 zugeordneten Ventilen und von Ventilen die jeweils einer Gruppe von Filterelementen 7 zugeordnet sind, führt nicht dazu, das der Umfang der vorliegenden Anmeldung verlassen wird.

Für alle im Rahmen dieser Anmeldung vorgestellten Ausbildungen ist vorgesehen, dass die verwendeten Flüssigkeitsventile (10,13) einzeln oder in Gruppen ansteuerbar sind.

In einer weiteren, besonders vorteilhaften Weiterbildung der vorliegenden Erfindung ist vorgesehen, durch geeignete Vorrichtungen wie z.B. Differenzdrucksensoren oder Drucksensoren in Verbindung mit einem zentralen, z.B. innerhalb des zentralen Verteilrohres 2 angeordneten Drucksensor und einer Steuerungseinheit, den Druckabfall an jedem einzelnen Filterelement 7 zu ermitteln und zur Steuerung des gesamten Filters und/oder jedes einzelnen Filterelementes 7 zu verwenden. Dabei wird es durch die Anwendung einer geeigneten, in der Regel rechnergestützten Steuerungseinheit ermöglicht, die für ein bestimmtes Filterelement 7 ermittelte Druckdifferenz gezielt zur Ansteuerung des diesem Filterelement 7 zugeordneten Filtratventils 13 zu verwenden.

Durch diese Vorgehensweise wird es, insbesondere bei der Verwendung von Stromregelventilen möglich, den gesamten Filter auf eine optimierte Weise zu betreiben. So ist es nunmehr erstmals möglich, alle Filterelemente 7 derart zu betreiben, dass alle Filterelemente 7 während der Filtration den selben Druckverlust aufweisen, wodurch sich besondere Vorteile hinsichtlich Energieverbrauch und Filtrationsergebnis ergeben. Ebenfalls ist es möglich, einzelne Filterelemente, welche aufgrund von Verschmutzungen einen zu hohen Druckverlust aufweisen durch Schließen des entsprechenden Filtratventils 13 vom Filtrationsprozess auszuschließen.

Zur Ermittlung des Druckverlustes an jedem einzelnen Filterelement 7 ist es vorteilhaft, alle Filtratventile 13 in die selbe Stellung zu bringen, diese z.B. voll zu öffnen, und den sich in dieser Situation für jedes Filterelement 7 ergebenden Druckverlust zu ermitteln.

Auch für die Anwendung der Drucksensoren ist im Rahmen einer weiteren Ausbildung vorgesehen, mehrere Filterelemente 7 mit einem gemeinsamen Drucksensor zu versehen, wobei bezüglich der Vor- und Nachteile dieser Vorgehensweise auf die entsprechenden Ausführungen zum Thema Flüssigkeitsventile verwiesen wird.

## Patentansprüche

1. Filtervorrichtung mit mehreren in Richtung einer vertikalen Filtermittelachse übereinander angeordneten, im Wesentlichen horizontalen Filterbereichen denen wenigstens ein zentrales Verteilrohr (2), wenigstens ein gemeinsamer Unfiltratkanal (1) zum Führen einer zu filternden Flüssigkeit (Unfiltrat) sowie wenigstens ein gemeinsamer Filtratkanal (14) zum Abführen der gefilterten Flüssigkeit (Filtrat) zugeordnet ist und die jeweils wenigstens eine an einem Filterelement (7) vorgesehene Filterschicht aufweist, die für das Anschwemmen wenigstens einer von mindestens einem Filterhilfsmittel gebildeten Anschwemmschicht dient und einen in den Filtratkanal (14) mündenden Filtratsammelbereich von einem darüber liegenden Trubraum trennt, sowie mit einem für jedes Filterelement (7) vorgesehenen, die Filtermittelachse umschließenden ringartigen Zulaufkanal (6) der an seinem Umfang in einem größeren, ersten radialen Abstand von der Filtermittelachse an einer Austrittsöffnung in den Trubraum (15) mündet und in einem kleineren, zweiten radialen Abstand von der Filtermittelachse wenigstens eine mit dem Unfiltratkanal in Verbindung stehende Eintrittsöffnung für das Unfiltrat aufweist, wobei der von den Filterbereichen umschlossene Austritt des Unfiltratkanals im Bereich der Filtermittelachse vorgesehen ist, **dadurch gekennzeichnet, dass** jedem Filterelement (7) und/oder einer Gruppe von Filterelementen (7) wenigstens ein Flüssigkeitsventil zugeordnet ist, welches sich im Filtratablauf befindet.

2. Filtervorrichtung nach dem Oberbegriff des Anspruches 1, **dadurch gekennzeichnet, dass** jedem Filterelement (7) und/oder einer Gruppe von Filterelementen (7) wenigstens ein Flüssigkeitsventil zugeordnet ist, welches sich in der Zufuhrleitung für die Spülflüssigkeit befindet.

3. Filtervorrichtung nach den Ansprüchen 1 oder 2, **dadurch gekennzeichnet, dass** jedem Filterelement (7) und/oder einer Gruppe von Filterelementen (7) wenigstens ein Drucksensor zugeordnet ist.

4. Filtervorrichtung nach Anspruch 3, **dadurch gekennzeichnet, dass** es sich bei dem Drucksensor um einen Differenzdrucksensor handelt.

5. Filtervorrichtung nach Anspruch 3, **dadurch gekennzeichnet, dass** es sich bei dem Drucksensor um ein System aus einem Drucksensor je Filterelement (7) und/oder je Gruppe von Filterelementen (7), einem zentralen Drucksensor und einer rechnergestützten Steuerungseinheit handelt.

6. Filtervorrichtung nach einem der Ansprüche 1 bis 5, **dadurch gekennzeichnet, dass** es sich bei den Flüssigkeitsventilen (10,13) um Absperrventile und/oder um Stromregelventile handelt.

7. Filtervorrichtung nach einem der Ansprüche 1 bis 6, **dadurch gekennzeichnet, dass** die Flüssigkeitsventile (10, 13) einzeln oder gruppenweise steuerbar sind.

8. Verfahren zur Reinigung einer Filtervorrichtung nach den Ansprüchen 1 oder 2, **dadurch gekennzeichnet, dass** die durch die Austragsdüsen (12) und/oder den Filtratraum in die Filterelemente (7) strömenden Volumenströme der Spülflüssigkeit je Filterelement (7) regelbar sind.

9. Verfahren zur Filtrierung mit einer Filtervorrichtung nach den Ansprüchen 1 oder 2, **dadurch gekennzeichnet, dass** der durch den Filtratraum strömende Volumenstrom je Filterelement (7) regelbar ist.

10. Verfahren nach Anspruch 8, **dadurch gekennzeichnet, dass** es sich bei der Spülflüssigkeit um Lauge handelt.

11. Verfahren nach einem der Ansprüche 8 bis 10, **dadurch gekennzeichnet, dass** die Filtratventile (13) während der Filtration so gesteuert werden, dass alle Filterelemente (7) den selben Druckverlust aufweisen.

12. Verfahren nach einem der Ansprüche 8 bis 11, **dadurch gekennzeichnet, dass** einzelne Filterelemente (7) durch Schließen des zugeordneten Filtratventils (13) dann vom Filtrationsprozess ausgeschlossen werden, wenn diese einen zu hohen Druckverlust aufweisen.
